# EUROPEAN PATENT SPECIFICATION

(11) **EP 2 487 780 B1**
(45) Date of publication and mention of the grant of the patent: **25.12.2019**
(21) Application number: 11154344.3
(22) Date of filing: 14.02.2011
(51) Int. Cl.: H02M 1/12, H02M 7/5387

(54) **Controller for a power converter and method of operating the same**
Steuergerät für einen Stromwandler und Betriebsverfahren dafür
Contrôleur pour convertisseur de puissance et son procédé de fonctionnement

(43) Date of publication of application: 15.08.2012
(73) Proprietor: Siemens Aktiengesellschaft, 80333 München (DE)
(72) Inventor: Brogan, Paul Brian, Glasgow, G63 9 AG (GB); Fulcher, Robert Vernon, Kidsgrove, Stoke On Trent, Staffordshire ST7 4EN (GB)

(56) References cited:
- DE-A1- 10 032 447
- US-B1- 6 472 775
- US-B1- 6 756 702
- MATTAVELLI P ET AL: "Dynamic improvement in UPS by means of control delay minimization", INDUSTRY APPLICATIONS CONFERENCE, 2004. 39TH IAS ANNUAL MEETING. CONFE RENCE RECORD OF THE 2004 IEEE SEATTLE, WA, USA 3-7 OCT. 2004, PISCATAWAY, NJ, USA,IEEE, vol. 2, 3 October 2004 (2004-10-03), pages 843-849, XP010735114, DOI: 10.1109/IAS.2004.1348511 ISBN: 978-0-7803-8486-6
- DENG H ET AL: "PWM Methods to Handle Time Delay in Digital Control of a UPS Inverter", IEEE POWER ELECTRONICS LETTERS, IEEE SERVICE CENTER, NEW YORK, NY, US, vol. 3, no. 1, 1 March 2005 (2005-03-01), pages 1-6, XP011128774, ISSN: 1540-7985, DOI: 10.1109/LPEL.2004.842402
- ALLMELING J ET AL: "A fast current control technique for active filters with low switching frequency", IECON'01. PROCEEDINGS OF THE 27TH. ANNUAL CONFERENCE OF THE IEEE INDUSTRIAL ELECTRONICS SOCIETY. DENVER, CO, NOV. 29 - DEC. 2, 2001; [ANNUAL CONFERENCE OF THE IEEE INDUSTRIAL ELECTRONICS SOCIETY], NEW YORK, NY : IEEE, US, vol. 2, 29 November 2001 (2001-11-29), pages 1125-1131, XP010572936, DOI: 10.1109/IECON.2001.975938 ISBN: 978-0-7803-7108-8
- SHUITAO YANG ET AL: "Analysis and Design of a Cost-Effective Voltage Feedback Control Strategy for EPS Inverters", POWER ELECTRONICS SPECIALISTS CONFERENCE, 2007. PESC 2007. IEEE, IEEE, PISCATAWAY, NJ, USA, 17 June 2007 (2007-06-17), pages 477-482, XP031218335, ISBN: 978-1-4244-0654-8

## Description

### FIELD OF INVENTION

The present invention relates to the field of power converters.

### BACKGROUND OF THE INVENTION

Within closed loop control systems which use sampled feedback data there is a finite delay between sampling the feedback variable and the actuator changing in response to these feedback signals. For example, in case of a three phase voltage sourced converter, the feedback variables are the three phase currents, and the actuator is in effect the pulse width modulation (PWM) bridge which changes the three phase voltage in amplitude and phase to control the three phase currents.

Typically in fixed switching frequency PWM schemes the current is sampled many times during a complete PWM period (PWM period = 1/(switching frequency)) and the average taken of these multiple samples becomes the current feedback variable as used by a controller. Using this method good attenuation of the PWM switching frequency related harmonic currents is achieved. However a finite phase delay is introduced within the control loop, due to the delay between sampling the current, doing the necessary mathematical calculations, and changing the voltage. Hence the PWM voltage actually changes in response to this sampled current with a certain delay. It is desirable from the point of view of control system stability, particularly when arrays of network connected PWM bridges are considered that these phase delays are minimised.

An article of MATIAVELLI P ET AL: "Dynamic improvement in UPS by means of control delay minimization", INDUSTRY APPLICATIONS CONFERENCE, 2004. 39TH IAS ANNUAL MEETING. CONFERENCE RECORD OF THE 2004 IEEE SEATTLE,WA, USA 3-7 OCT. 2004, PISCATAWAY, NJ, USA,IEEE, vol. 2, 3 October 2004 (2004-10-03), pages 843-849, XP010735114,DOI: 10.1109/IAS.2004.1348511, ISBN: 978-0-7803-8486-6, relates to a dynamic improvement in an uninterruptible power supply (UPS) by means of control delay minimization. Further prior art for the present application is DE 10032447 A1, US 6 756 702 B1 and US 6472775 B1.

In view of the above-described situation, there exists a need for an improved technique that enables to provide a converter controller with improved characteristics, while substantially avoiding or at least reducing one or more of the above-identified problems.

### SUMMARY OF THE INVENTION

This need may be met by the subject matter according to the independent claims. Advantageous embodiments of the herein disclosed subject matter are described by the dependent claims.

According to a first aspect of the invention there is provided a controller for a converter, the converter receiving an input power and providing an output power by a switching operation, the controller comprising: an input for receiving a feedback signal depending on the output power of the converter; and an output for providing a control signal to the converter to thereby control the switching operation of the converter, the control signal corresponding to a switching pattern that is updated in response to the feedback signal; the control signal having an harmonic compensation signal which reduces higher harmonics in the output power, the higher harmonics originating from a time delay between taking the feedback signal and the updating of the switching pattern.

This aspect of the invention is based on the idea that a delay between taking of the feedback signal and updating the switching pattern can be reduced while maintaining undesired harmonics at an acceptable level by at the same time compensating these harmonics by at least one a harmonic compensation signal in the control signal to the converter.

According to an embodiment, the converter is a power converter, e.g. a power converter of a wind turbine device.

According to an embodiment, the output power has at least two phases, e.g. three phases (three-phase power). For example, in an embodiment the output power is provided on two or more electrical conductors (one for each phase) carrying alternating currents with a definite time offset (phase difference) between the voltage waves in each conductor. In other embodiments, the output power has a single phase.

According to an embodiment, the controller further comprises a modulation signal generator for providing a modulation signal; a compensation generator for generating a harmonic compensation component; wherein the controller is configured for providing the control signal depending on the modulation signal and the harmonic compensation component.

According to an embodiment, the harmonic compensation component includes one or more harmonic components of suitable phase and magnitude to compensate undesired harmonics in the PWM voltage. Generally herein the harmonic compensation component includes a single one of such harmonic components or, in another embodiment, a plurality of such harmonic components (of suitable phase and magnitude).

According to a further embodiment, the controller further comprises an adder for adding the modulation signal and the harmonic compensation component to thereby generate a summing signal. For example, according to an embodiment, the harmonic compensation component is the harmonic component which is directly added to the modulation signal. In such a case, the summing signal is the control signal.

According to another embodiment, the controller further comprises a signal processing unit for processing the summing signal, thereby generating the control signal. For example, the summing signal may be compared to a reference signal, e.g. a triangular carrier signal in order to obtain the times where switching has to occur.

According to a further embodiment, the controller further comprises a lookup table having stored therein a plurality of compensation indicators, each compensation indicator corresponding to a respective harmonic compensation component; and the compensation generator being configured for generating the harmonic compensation component on the basis of a selected compensation indicator. Further, according to an embodiment, the compensation generator is configured for receiving at least one of a modulation depth, a modulation angle and the time delay; and providing in response hereto the harmonic compensation component.

For example, in an embodiment the lookup table has stored therein compensation indicators for a plurality of different modulation depths, modulation angles and time delays. The compensation generator is then configured for receiving an actual modulation depth, a modulation angle and the time delay and for selecting in response hereto the corresponding compensation indicator. The compensation generator generates the harmonic compensation component on the basis of the selected compensation indicator.

According to a further embodiment, the output power has at least two phases and the update of the switching pattern is performed at a point in time where the voltage levels of the at least two phases are different. For example, without harmonic compensation signal an update of the switching pattern would be performed at a midpoint of a zero vector, wherein the zero vector corresponds to the time interval where the voltage level is identical for all of the at least two phases. Having the harmonic compensation signal according to embodiments of the herein disclosed subject matter, the update of the switching pattern can be performed at any time, independent of the midpoint of the zero vector, i.e. in particular at times where the voltage levels of the at least two phases are different. An alternative for a "point in time where the voltage levels of the at least two phases are different" is a point in time where the control signal components for each of the at least two phases are different.

According to a further embodiment, the time delay is determined by a computation time necessary to determine the control signal. For example, in an embodiment the time delay is not prolonged artificially but is only determined by the necessary computation time. In this sense, such a time delay is a minimum time delay that is due to the configuration of the controller.

According to a second aspect of the herein disclosed subject matter, a converter device is provided, the converter device comprising a controller according to the first aspect or an embodiment thereof; and the converter referred to in the first aspect, the converter having an input for receiving the input power and an output for providing the output power by the switching operation.

According to a third aspect of the herein disclosed subject matter, a method of operating a controller for a converter is provided, the converter receiving an input power and providing an output power by a switching operation, the method comprising receiving a feedback signal depending on the output power of the converter; and providing a control signal to the converter to thereby control the switching operation of the converter, the control signal corresponding to a switching pattern that is updated in response to the feedback signal; the control signal having an harmonic compensation signal which reduces higher harmonics in the output power, the higher harmonics originating from a time delay between taking the feedback signal and the updating of the switching pattern.

According to an embodiment of the third aspect, the output power has at least two phases.

According to an embodiment of the third aspect, the method further comprises providing a modulation signal; generating a harmonic compensation component; and providing the control signal depending on the modulation signal and the harmonic compensation component.

According to a still further embodiment, the method further comprises adding the modulation signal and the harmonic compensation component to thereby generate a summing signal.

According to a still further embodiment, the method further comprises providing a lookup table having stored therein a plurality of compensation indicators, each compensation indicator corresponding to a respective harmonic compensation component (or, in another embodiment, to a respective harmonic compensation signal); selecting one of the plurality of compensation indicators; and generating the harmonic compensation component on the basis of the selected compensation indicator.

According to a further embodiment of the third aspect, the output power has at least two phases and the update of the switching pattern is performed at a point in time where the voltage levels of the at least two phases are different.

Generally herein, respective embodiments of the third, method aspect may include one or more features and/or functions as described with regard to the first, device aspect. In such cases, the device features described with regard to the first aspect should not be considered as limiting the method claim. Rather, at least when referring to features disclosed with regard to a device, it is noted that such a device disclosure implicitly discloses the respective function or the respective method features independent from the device features.

Hence, in an embodiment of the third aspect, the method is configured in accordance with the first aspect or an embodiment thereof.

According to a fourth aspect of the herein disclosed subject matter a computer program is provided, the computer program being adapted for, when being executed by a processor device, controlling the method as set forth in the third aspect or an embodiment thereof.

As used herein, reference to a computer program is intended to be equivalent to a reference to a program element and/or a computer readable medium containing instructions for controlling a computer system to coordinate the performance of the above described method or embodiments thereof.

The computer program may be implemented as computer readable instruction code by use of any suitable programming language, such as, for example, JAVA, C++, and may be stored on a computer-readable medium (removable disk, volatile or nonvolatile memory, embedded memory/processor, etc.). The instruction code is operable to program a computer or any other programmable device to carry out the intended functions. The computer program may be available from a network, such as the World Wide Web, from which it may be downloaded.

The invention may be realized by means of a computer program respectively software. However, the invention may also be realized by means of one or more specific electronic circuits respectively hardware. Furthermore, the invention may also be realized in a hybrid form, i.e. in a combination of software modules and hardware modules.

In the above there have been described and in the following there will be described exemplary embodiments of the subject matter disclosed herein with reference to a controller of a converter device, a converter device and a method of operating such a controller. It has to be pointed out that of course any combination of features relating to different aspects of the herein disclosed subject matter is also possible. In particular, some embodiments are apparatus type embodiments whereas other embodiments are method type embodiments. However, a person skilled in the art will gather from the above and the following description that, unless other notified, in addition to any combination of features belonging to one aspect also any combination between features relating to different aspects or embodiments, for example even between features of the apparatus type embodiments and features of the method type embodiments is considered to be disclosed with this application.

The aspects and embodiments defined above and further aspects and embodiments of the present invention are apparent from the examples to be described hereinafter and are explained with reference to the drawings, but to which the invention is not limited.

### BRIEF DESCRIPTION OF THE DRAWINGS

Fig. 1 shows a converter device in accordance with embodiments of the herein disclosed subject matter.
Fig. 2 illustrates current sampling over a PWM period wherein an average of samples during a previous PWM period is used as current feedback.
Fig. 3 illustrates current sampling at a midpoint of the zero vector wherein a current sample point is at a PWM period midpoint.
Fig. 4 shows the updating of the switching pattern at a point in time other than the subsequent midpoint of the zero vector.
Fig. 5 shows the magnitude of the harmonic current (z-axis) over the harmonic order (x-axis) and the switching pattern update offset tc (y-axis).
Fig. 6 illustrates for a single phase the determination of a PWM switching pattern from an exemplary modulating waveform and a triangular carrier.
Fig 7 shows a controller in accordance with embodiments of the herein disclosed subject matter.

### DETAILED DESCRIPTION

The illustration in the drawings is schematic. It is noted that in different figures, similar or identical elements are provided with the same reference signs and the description of these elements is not repeated upon further occurrence of these elements.

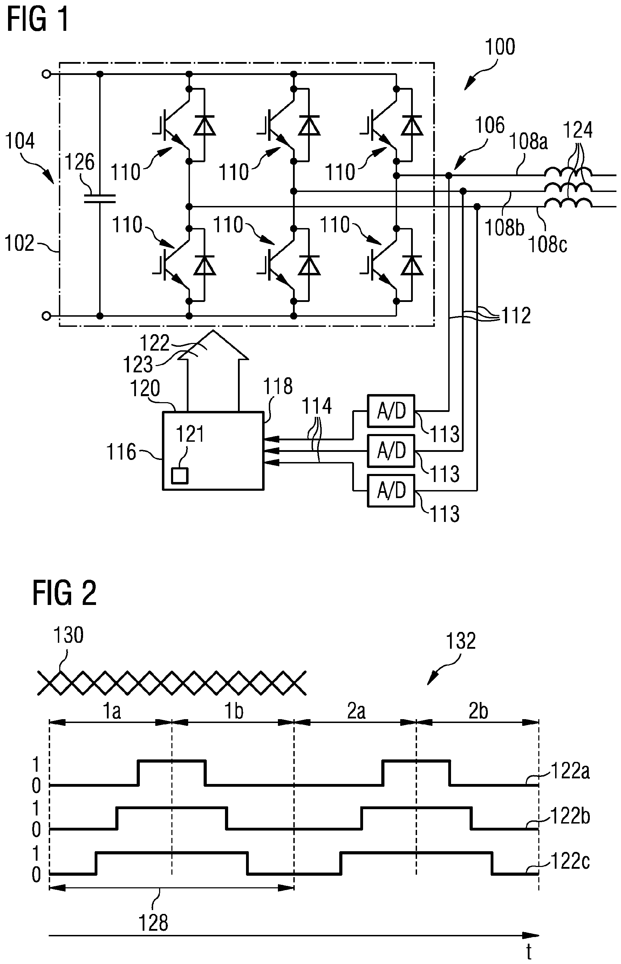

Fig. 1 shows a converter device 100 in accordance with embodiments of the herein disclosed subject matter. In accordance with an embodiment, the converter device 100 comprises a converter, generally indicated at 102. The converter 102 has an input 104 for receiving an input voltage, e.g. a DC voltage and an output 106 for providing an output power by the switching operation of the converter 102. In an embodiment, the output power is a three-phase power. Accordingly, the output 106 comprises three output lines 108a, 108b, 108c corresponding to the three phases.

In accordance with an embodiment, the converter comprises a pulse width modulation bridge having two switching elements 110 per phase. The switching elements 110 are insulated gate bipolar transistors (IGBTs) having a freewheel diode connected in parallel as shown in Fig. 1.

Further, the converter device 100 has a feedback line 112 coupled to each output line 108a, 108b, 108c to sense the output current of each phase. Further, an analog/digital converter (A/D converter) 113 is provided for each phase for providing for each phase a respective feedback signal 114 in response to the sensed current.

The converter device further comprises a controller 116 configured in accordance with embodiments of the herein disclosed subject matter. The controller 116 has an input 118 for receiving the feedback signals 114 which depend on the output power of the converter 102. Further, the controller comprises an output 120 for providing a control signal 122 to the converter 102 to thereby control the switching operation of the converter 102. For example, in an embodiment, the switching signals 122 are IGBT gate signals provided to the gates of the IGBTs.

In an embodiment, the controller 116 includes a processor device 121 configured for carrying out a computer program that provides at least one function of the controller 116.

In accordance with an embodiment, the control signal 102 corresponds to a switching pattern that is updated in response to the feedback signals 114. Further, the control signal 122 includes an harmonic compensation signal 123 which reduces higher harmonics in the output power, the higher harmonics originating from a time delay between taking the feedback signal and the updating of the switching pattern.

Further shown in Fig. 1 are windings 124 of a reactor/inductor and a filtering capacitor 126. However, these elements perform their usual function and are not further described here.

In the following, possible operation schemes of a converter device are described to further illustrate advantages of aspects and embodiments of the herein disclosed subject matter.

Fig. 2 illustrates current sampling over a PWM period wherein an average of N samples during a previous PWM period is used as current feedback. Shown in Fig. 2 are the control signal components 122a, 122b, 122c corresponding to the phases on lines 108a, 108b, 108c in Fig. 1 over time t. Further shown in Fig. 2 is the PWM period 128 corresponding to a fixed switching frequency. The PWM period is defined as PWM period = 1/(switching frequency).

Typically in the current is sampled many times during a complete PWM period 128, the sampling being indicated at 130. The average of these multiple (e.g. N) samples is used as the current feedback variable, leading to an updated switching pattern at a time indicated at 132. While the described method provides a method good attenuation of the PWM switching frequency related harmonic currents, it introduces a finite phase delay due to the time delay between sampling the current during intervals 1a and 1b, doing the necessary mathematical calculations during 2a, and respectively changing the PWM voltage at the output of the bridge. It is desirable from the point of view of control system stability, particularly when arrays of wind turbines, or arrays of network connected PWM bridges are considered that these phase delays are minimised. With a scheme such as shown in Fig. 2, the effective delay is 500 microseconds (µs) (assuming 400 µs PWM period which is typical e.g. for wind turbines).

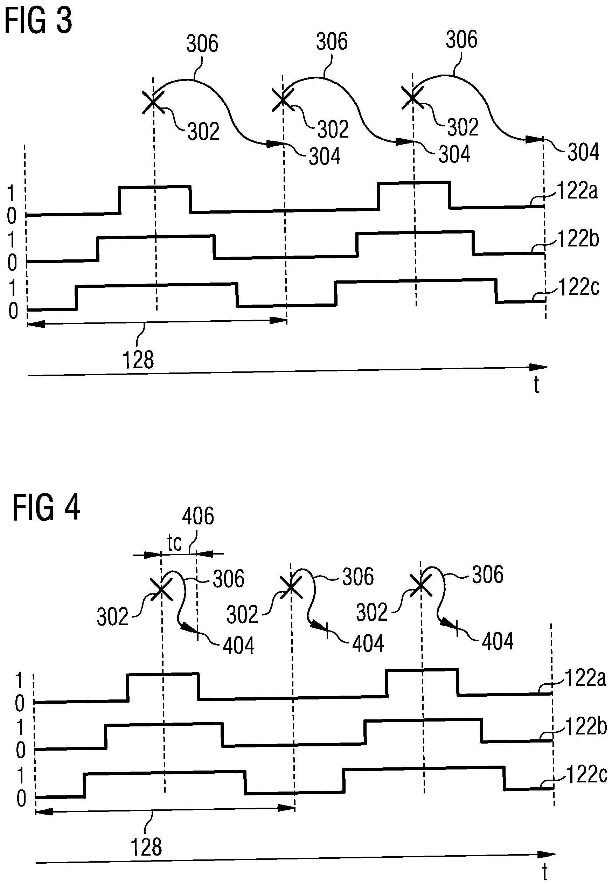

Fig. 3 illustrates 'synchronous' current sampling at a midpoint 302 of the zero vector wherein a current sample point is at a PWM period midpoint. The switching pattern is updated at the next midpoint of the zero vector, indicated at 304. The arrows 306 indicate the time delay between taking the feedback signal and the updating of the switching pattern.

When the IGBT's are switched such that either all the upper devices are ON, or all the lower devices are ON this is known as a zero vector and is equivalent to the upper and lower peaks in a sine triangular comparison method of generating PWM pulses. As mentioned, the current is sampled at the midpoint of the zero vector (e.g. in the middle of the PWM period) as shown in Fig. 3. The midpoint of zero vector is indicated by the vertical lines in Fig. 3. The currents are sampled at this point, i.e. at a midpoint of a zero vector, since favourable cancellation of the switching frequency harmonics results thereof. Using the technique of synchronously sampling the three phase current feedbacks and updating the PWM pattern at the midpoint of the zero vectors (asymmetric PWM), as shown in Fig. 3, results in an effective delay between the current sample and the voltages appearing on the output of the bridge of a 3/4 PWM period. Assuming a 400µs PWM period this equates to 300us delay.

However, the constraint of updating the PWM switching pattern only at the mid points of the zero vectors introduces a delay of 1/2 PWM period. Whilst this may suit microprocessor systems by permitting sufficient time for control calculation to be performed, it does not offer the optimal behaviour from a control loop stability point of view, as the delay introduced is not at its absolute minimum.

Given that the control calculations are performed every 1/2 PWM period, this results in an effective delay of lOOps. In an ideal consideration where A/D conversion times are zero, and microprocessor CPU resource is infinite then this lOOps would be the minimum delay possible.

Experience of wind farm collector systems to date has shown that due to resonances in the wind farm collector system it is highly desirable to have the minimum phase lag (phase delay) introduced by the controller. Resonances are usually caused e.g. by medium voltage (MV) and/or high voltage (HV) cables, or potentially capacitor banks for VAr compensation, or AC filters. The minimum phase lag allows to achieve a robust current control arrangement, both at an individual network bridge (or turbine) level and across the complete array of network bridges (or turbines). This minimal phase delay reduces the likelihood of the current controller interacting with AC system resonances.

However, the methods of current sampling and updating of the PWM switching pattern as described with regard to Fig. 2 and Fig. 3 appear suitable for motor drive converter devices.

In contrast, the connection of high power, GRID connected voltage sourced inverters, which is one application of the herein disclosed subject matter, has different requirements. The fact that converters in such applications are connected e.g. within wind farm collector systems which contain resonances place new and demanding requirements on the current loop stability which are more demanding than standard motor control applications.

However, updates of the switching pattern within the PWM period elsewhere than at the midpoint of the zero vector is not a straightforward task because, updating the PWM modulating waveform (it is a discrete signal) elsewhere within the PWM period results in an increase in the low order harmonic content of the PWM voltage.

However, low order harmonics are desirably minimized and hence updating the switching pattern (or, in embodiments updating the PWM modulating waveform) elsewhere than at the midpoint of the zero vector appears not suitable without the concepts provided by aspects and embodiments of the herein disclosed subject matter.

However it should be noted that traditional 'analog' type PWM schemes where the sine triangle comparison is made, the sine or modulating waveform is a continuous (not sampled) waveform.

Advantageously, aspects and embodiments of the herein discloses subject matter allow updating the switching pattern at a point in time other than the subsequent midpoint of the zero vector.

For example, in order to try and reduce the delay between sampling the current and updating the voltage of the PWM bridge a scheme such as presented in Fig 4 is proposed. The current feedback is still sampled at the midpoint 302 of the zero vector. This has the advantage of minimising the harmonic content within the sampled current feedback signal. However in accordance with an embodiment, Fig. 4 shows the updating of the switching pattern at a point in time 404 other than the subsequent midpoint of the zero vector, a delay (tc) 406 after the current sample is taken. In an embodiment, the delay 406 is the time taken for the microprocessor to perform the necessary calculations, and these calculations can now be minimised to reduce the effective delay introduced by the controller.

For illustration purposes it is assumed that the delay 406 is tc = 50µs. With the scheme proposed in Fig. 4 the delay introduced by the controller can now be reduced to 1/4 PWM period + 50 µs. Hence, based on a 400 µs PWM period the current is sampled twice per PWM period, i.e. every 200 µs. With the PWM pattern being updated 50µs after the current sampling, this results in an effective delay of 150 µs. An advantage of thereof is that the point at which the open loop phase, of the controller response, rolls off to -180° is now 0.5/150µs = 3333 Hertz (Hz).

Similar considerations for the previous scheme shown in Fig. 3, which has an effective delay of 300 µs (3/4 PWM period), show that a -180° phase is obtained at approximately 0.5/300µs = 1666 Hz.

Further, similar considerations for the previous scheme shown in Fig. 2, which has an effective delay of 500 µs, show that the phase rolls off at 0.5/500µs = 1 kHz.

If in a control system the gain of an open loop system is greater than unity at any frequency above which the phase rolls off to an angle smaller or equal (<=) -180° then the corresponding closed loop system is unstable. In reality AC series resonances result in a gain greater than unity.

So in principle one consequence of the exemplary minimized delay scheme suggested above is that the closed loop system is now immune to resonances which are at frequencies smaller or equal to 3333 Hz, whereas the schemes shown in Fig. 2 and Fig. 3 are only immune to resonances at frequencies smaller than 1000 Hz in the case of Fig. 2, or smaller than 1666 Hz in the case of Fig. 3. In practice it is likely that resonances will exist at frequencies smaller than (<) 3kHz such that these schemes do not offer the possibility of being completely immune to AC system resonances. However, having a controller which is immune to resonances up to 3333 Hz before the phase rolls off can be considered a significant improvement.

However the consequence of not updating the PWM pattern at the midpoint of the zero vector is an increase in the low order harmonic voltage content of the PWM output voltage.

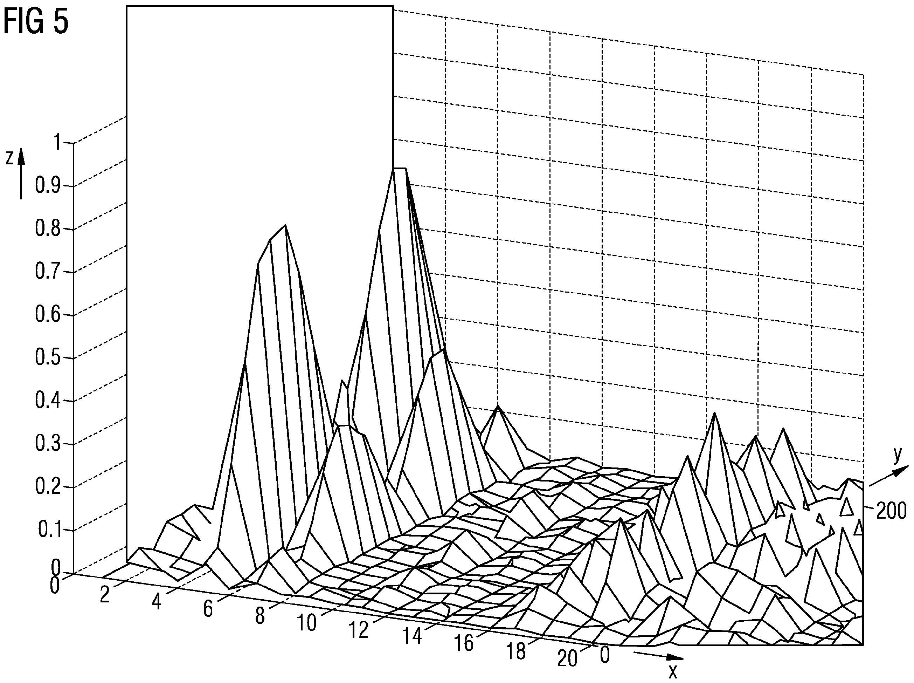

Fig. 5 shows the magnitude of the harmonic current (z-axis) over the harmonic order (x-axis) and the switching pattern update offset tc (y-axis).

The first harmonic (fundamental component) corresponds to the desired signal. Higher harmonics (shown up to about 20th order) appear if the switching pattern are updated elsewhere than at the midpoint of the zero vector. As can be seen from Fig. 5, at the zero vectors, effectively 0 µs and 200 µs on the Y axis, the low order harmonic current is approximately zero, however at points in between this is not the case besides a minimum at 100 µs.

Further, Fig. 5 shows a strong increase in the 5th harmonic current (but not only the 5th harmonic) for the switching pattern being updated at points other than the midpoint of the zero vector. For the purposes of this discussion the spectra shown in Fig. 5 can be considered a harmonic voltage spectra.

However, the simulation result shown in Fig. 5 was obtained without a harmonic compensation signal which reduces higher harmonics in the output power.

In the following, embodiments relating to the harmonic compensations signal are further discussed in the following.

According to an embodiment, the harmonic compensation signal is obtained by introducing a compensation waveform to the PWM modulation waveform, the compensation waveform compensating the harmonic voltages introduced by updating the switching pattern at points other that the midpoint of the zero vectors.

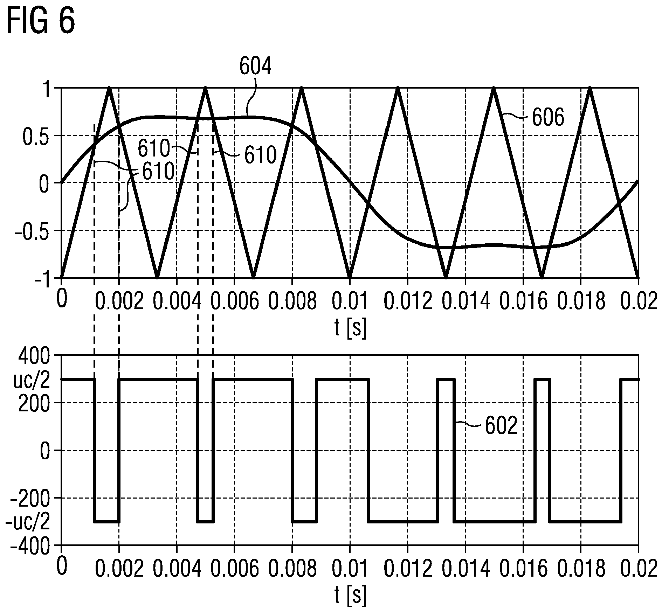

Fig. 6 illustrates for a single phase the determination of a PWM switching pattern 602 from an exemplary modulating waveform 604 and a triangular carrier 606 (in arbitrary units).

The PWM switching pattern 602 (wherein uc is the voltage over capacitor 126 in Fig. 1), the modulating waveform 604 and the triangular carrier 606 are drawn over time t in seconds t(s). A modulating waveform such as shown for a single phase in Fig. 6, can be derived by several different means, typically a third harmonic voltage component, or series of triplen harmonic voltages is/are added to the fundamental to maximise the resulting output voltage. Space vector PWM achieves a similar output voltage harmonic spectrum by mathematical calculation of the IGBT switching times. Points in time where the modulating waveform 604 crosses the triangular carrier 606 indicate a switching event, as is exemplary illustrated by the lines 610.

If a series of harmonic components of suitable phase and magnitude are added to the modulating waveform 604 of Fig. 6, to compensate for the harmonic voltages present in the PWM voltage spectrum of Fig. 5, then the resulting PWM voltage will contain no low order harmonic voltage components or the low order harmonic components are at least reduced.

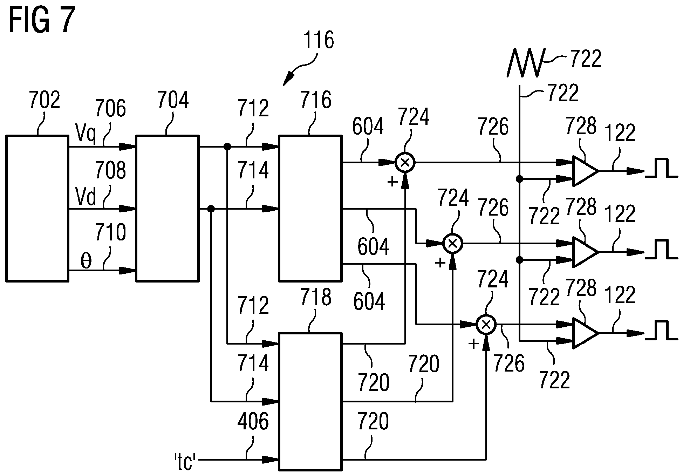

Fig 7 shows a controller 116 in accordance with embodiments of the herein disclosed subject matter.

In an exemplary embodiment, the controller 116 comprises a vector control unit 702 and a modulation calculator 704 which receives a q-axis component (Vq) 706, a d-axis component (Vd) 708 as well as a phase angle 710 indicative of the position of the rotating reference frame defining the q-axis and the d-axis of the vector control. In response to the values received from the vector control unit 702, the modulation calculator 704 calculates a modulation depth 712 and a modulation angle 714. Further, a modulation signal generator 716 is provided, the modulation signal generator 716 being configured for providing a modulation signal, e.g. in the form of a modulating waveform 604.

Further, in accordance with an embodiment, a compensation generator 718 is provided, the compensation generator 718 being configured for generating a harmonic compensation component 720 in response to input parameters. In an embodiment, the input parameters are the modulation depth 712, the modulation angle 714 and the time delay tc between the sampling of the current and the corresponding switching pattern update. In an embodiment, the harmonic compensation component 720 is a function of these variables, modulation depth 712, the modulation angle 714 and the time delay tc 406. However, in accordance with embodiments, such a function may be defined in the compensation generator 718 by a lookup table. Further, in accordance with an embodiment, the controller 116 is configured for providing the control signal 122 depending on the modulation signal 604 and the harmonic compensation component 720.

In an embodiment, the modulation signal generator 716 uses a triplen enhanced sinewave reference waveform, or Look up table, or does an on line calculation to obtain the amplitude, i.e. the modulating waveform 604. In accordance with an embodiment, the additional harmonic compensation component 720 is added to the modulating waveform 604 by an adder 724, to thereby generate a summing signal 726.

In accordance with an embodiment, the controller further comprises a signal processing unit 728 for processing the summing signal 726, thereby generating the control signal 122. For example, in an embodiment the modulating waveform 604 is compared to the triangular carrier waveform 722 by the signal processing unit 728 to produce the individual control signals 122 which compensate for the phase lag, i.e. the harmonics that originate from a time delay between taking the feedback signal and the updating of the switching pattern.

Deadtime compensation and or other bridge linearization features are not shown in this figure, and are not specifically compensated for with this technique. It is believed that alternative techniques exist to achieve this.

According to an embodiment, the harmonic compensation component 720 contains a series of normalized harmonic voltages as a function of modulation depth, angle and 'tc' the time delay between current sampling and switching pattern update.

According to an embodiment, a lookup table is provided in order to provide the harmonic compensation component 720 as a function of one or more defining parameters such as a modulation depth, a modulation angle and the time delay. In accordance with an embodiment, the lookup table has stored therein a plurality of compensation indicators, each compensation indicator corresponding to a respective harmonic compensation component. The compensation generator is configured for generating the harmonic compensation component on the basis of a selected compensation indicator. Typically the lookup table (compensation table) are calculated offline based on a desired 'tc' 406 such that the resulting PWM voltage contains none of the harmonic voltages of Fig. 5 across the entire operating range of modulation depth.

The described technique permits a significant and technically advantageous reduction in the phase shift introduced by the digital current controller across a frequency range that is related to wind farm AC collector systems, and should not suffer from undesirable low order harmonic voltages in the output PWM waveform.

According to embodiments of the invention, any suitable entity (e.g. controllers, components, units and devices) disclosed herein are at least in part provided in the form of respective computer programs which enable a processor device to provide the functionality of the respective entities as disclosed herein. According to other embodiments, any suitable entity disclosed herein may be provided in hardware. According to other - hybrid - embodiments, some entities may be provided in software while other entities are provided in hardware.

It should be noted that any entity disclosed herein (e.g. controllers, components, units and devices) are not limited to a dedicated entity as described in some embodiments. Rather, the herein disclosed subject matter may be implemented in various ways and with various granularity on device level or software module level while still providing the desired functionality. Further, it should be noted that according to embodiments a separate entity (e.g. a software module, a hardware module or a hybrid module) may be provided for each of the functions disclosed herein. According to other embodiments, an entity (e.g. a software module, a hardware module or a hybrid module (combined software/hardware module)) is configured for providing two or more functions as disclosed herein. According to an embodiment, the controller comprises a processor device including at least two processors for carrying out at least one computer program corresponding to a respective software module.

It should be noted that the term "comprising" does not exclude other elements or steps and the "a" or "an" does not exclude a plurality. Also elements described in association with different embodiments may be combined. It should also be noted that reference signs in the claims should not be construed as limiting the scope of the claims.

In order to recapitulate the above described embodiments of the present invention one can state:
There is provided a controller for a converter and a respective method of operating such a controller. The converter receives an input power and provides an output power by a switching operation wherein in an embodiment the output power has at least two phases. In accordance with embodiments, the controller comprises an input for receiving a feedback signal depending on the output power of the converter; and an output for providing a control signal to the converter to thereby control the switching operation of the converter, the control signal corresponding to a switching pattern that is updated in response to the feedback signal; the control signal including an harmonic compensation signal which reduces higher harmonics in the output power, the higher harmonics originating from a time delay between taking the feedback signal and the updating of the switching pattern.

Embodiments of the herein disclosed subject matter include one or more of the following advantages, as is readily recognized by a skilled person:
1. A significant and advantageous reduction in the phase shift/time delay introduced by the current controller can be achieved, with respect to current loop stability and the overall wind farm current loop stability. The ability to significantly increase the effective phase margin means that a robust current controller can be implemented which is at least to some extent immune to the electrical system to which the current controller is connected. The ability to do this means that a 'one size fits all' approach can be taken to a turbines electrical connection as it will be less likely, or not required, that individual studies are required to assess the stability margin of a particular wind farm arrangement. Typically from one windfarm to the next the collector system will have a range of resonance frequencies associated with it as will have medium voltage and/or high voltage cables or overhead lines (and/or locally connected power factor correction equipment or tuned filters).
2. The ability to achieve the aforementioned point 1, and not compromise the harmonic emissions of the turbine due to harmonic voltages in the resulting PWM is achieved by the addition of the harmonic compensation table within the PWM modulating waveform generator.
3. Embodiments allow updating the PWM modulation waveform at a point other than the midpoint of the zero vectors.
4. An advantage of embodiments of the herein discloses subject matter is that power filters may need not be fitted to stabilize particular wind farm collector systems as the improvements in control result in sufficient phase margin, rather than needing to resort to a power hardware solution, which would involve significant cost.

## Claims

1. Controller (116) for a converter (102) receiving an input power and providing an output power by a switching operation, the controller (116) comprising:
- an input (118) for receiving a feedback signal (114) depending on the output power of the converter; and
- an output (120) for providing a control signal (122) to the converter (102) to thereby control the switching operation of the converter (102), the control signal (122) corresponding to a switching pattern that is updated in response to the feedback signal (114);
- the control signal (122) including a harmonic compensation signal (123) for reducing higher harmonics in the output power, the higher harmonics originating from a time delay (406) between taking the feedback signal (114) and the updating of the switching pattern;
- the controller (116) further comprising
- a modulation signal generator (716) for providing a modulation signal (604);
caracterised by
- a compensation generator (718) for generating a harmonic compensation component (720) based on said time delay (406) ; and
- the controller (116) being configured for providing the control signal (122) depending on the modulation signal (604) and the harmonic compensation component (720).

2. Controller according to claim 1, the controller (116) further comprising
- an adder (724) for adding the modulation signal (604) and the harmonic compensation component (720) to thereby generate a summing signal (726).

3. Controller according to claim 2, the controller (116) further comprising:
- a signal processing unit (728) for processing the summing signal (726), thereby generating the control signal (122).

4. Controller according to one of claims 1 to 3, further comprising
- a lookup table having stored therein a plurality of compensation indicators, each compensation indicator corresponding to a respective harmonic compensation component (720); and
- the compensation generator (718) being configured for generating the harmonic compensation component (720) on the basis of a selected compensation indicator.

5. Controller according to one of claims 1 to 4, wherein the compensation generator is configured for
- receiving at least one of a modulation depth (712) and a modulation angle (714) and
- providing in response hereto the harmonic compensation component (720).

6. Controller according to one of claims 1 to 5, wherein the output power comprises at least two phases and the update of the switching pattern is performed at a point (404) in time where the voltage levels of the at least two phases are different.

7. Controller according to one of claims 1 to 6, wherein the time delay (406) is determined by a computation time necessary to determine the control signal (122).

8. Converter device (100) comprising:
- a controller (116) according to one of claims 1 to 7; and
- the converter (102) with an input (104) for receiving the input power and an output (106) for providing the output power by the switching operation.

9. Method of operating a controller (116) for a converter (102) receiving an input power and providing an output power by a switching operation, the method comprising:
- receiving a feedback signal (114) depending on the output power of the converter (102); and
- providing a control signal (122) to the converter (102) to thereby control the switching operation of the converter (102), the control signal (122) corresponding to a switching pattern that is updated in response to the feedback signal (114);
- the control signal (122) including a harmonic compensation signal (123) for reducing higher harmonics in the output power; the higher harmonics originating from a time delay (406) between taking the feedback signal (114) and the updating of the switching pattern;
- providing a modulation signal (604); caracterised by
- generating a harmonic compensation component (720) based on said time delay (406) ; and
- providing the control signal (122) depending on the modulation signal (604) and the harmonic compensation component (720).

10. Method according to claim 9, further comprising
- adding the modulation signal (604) and the harmonic compensation component (720) to thereby generate a summing signal (726).

11. Method according to one of claims 9 or 10, further comprising
- providing a lookup table having stored therein a plurality of compensation indicators, each compensation indicator corresponding to a respective harmonic compensation component (720);
- selecting one of the plurality of compensation indicators; and
- generating the harmonic compensation component (720) on the basis of the selected compensation indicator.

12. Method according to one of claims 9 to 11, wherein the output power has at least two phases and the update of the switching pattern is performed at a point in time (404) where the voltage levels of the at least two phases are different.

13. A computer program, the computer program being adapted for, when being executed by the controller of claim 1 to execute the method steps as set forth in any one of the claims 9 to 12.

## Patentansprüche

1. Steuereinheit (116) für einen Umsetzer (102), der eine Eingangsleistung aufnimmt und eine Ausgangsleistung durch einen Schaltbetrieb liefert, wobei die Steuereinheit (116) Folgendes umfasst:
- einen Eingang (118) zum Empfangen eines Rückkopplungssignals (114) abhängig von der Ausgangsleistung des Umsetzers; und
- einen Ausgang (120) zum Liefern eines Steuersignals (122) zum Umsetzer (102), um dadurch den Schaltbetrieb des Umsetzers (102) zu steuern, wobei das Steuersignal (122) einem Schaltmuster entspricht, das als Antwort auf das Rückkopplungssignal (114) aktualisiert wird; wobei
- das Steuersignal (122) ein Oberwellenkompensationssignal (123) zum Verringern von Oberwellen in der Ausgangsleistung enthält, wobei die Oberwellen aus einer Zeitverzögerung (406) zwischen dem Aufnehmen des Rückkopplungssignals (114) und dem Aktualisieren des Schaltmusters stammen; und
- die Steuereinheit (116) ferner Folgendes umfasst:
- einen Modulationssignalgenerator (716), um ein Modulationssignal (604) zu liefern;
**gekennzeichnet durch**
- einen Kompensationsgenerator (718) zum Erzeugen einer Oberwellenkompensationskomponente (720) auf der Grundlage der Zeitverzögerung (406); und
- **dadurch, dass** die Steuereinheit (116) konfiguriert ist, das Steuersignal (122) abhängig vom Modulationssignal (604) und der Oberwellenkompensationskomponente (720) zu liefern.

2. Steuereinheit nach Anspruch 1, wobei die Steuereinheit (116) ferner Folgendes umfasst:
- einen Addierer (724), um das Modulationssignal (604) und die Oberwellenkompensationskomponente (720) zu addieren, um dadurch ein Summensignal (726) zu erzeugen.

3. Steuereinheit nach Anspruch 2, wobei die Steuereinheit (116) ferner Folgendes umfasst:
- eine Signalverarbeitungseinheit (728) zum Verarbeiten des Summensignals (726), um dadurch das Steuersignal (122) zu erzeugen.

4. Steuereinheit nach einem der Ansprüche 1 bis 3, die ferner Folgendes umfasst:
- eine Nachschlagtabelle, in der mehrere Kompensationsindikatoren gespeichert sind, wobei jeder Kompensationsindikator einer entsprechenden Oberwellenkompensationskomponente (720) entspricht; und
- der Kompensationsgenerator (718) konfiguriert ist, die Oberwellenkompensationskomponente (720) auf der Grundlage eines gewählten Kompensationsindikators zu erzeugen.

5. Steuereinheit nach einem der Ansprüche 1 bis 4, wobei der Kompensationsgenerator konfiguriert ist zum
- Empfangen einer Modulationstiefe (712) und/oder eines Modulationswinkels (714) und
- Liefern als Antwort darauf der Oberwellenkompensationskomponente (720).

6. Steuereinheit nach einem der Ansprüche 1 bis 5, wobei die Ausgangsleistung mindestens zwei Phasen umfasst und das Aktualisieren des Schaltmusters zu einem Zeitpunkt (404) durchgeführt wird, zu dem die Spannungspegel der mindestens zwei Phasen verschieden sind.

7. Steuereinheit nach einem der Ansprüche 1 bis 6, wobei die Zeitverzögerung (406) durch eine Rechenzeit bestimmt wird, die zum Bestimmen des Steuersignals (122) nötig ist.

8. Umsetzervorrichtung (100), die Folgendes umfasst:
- eine Steuereinheit (116) nach einem der Ansprüche 1 bis 7 und
- den Umsetzer (102) mit einem Eingang (104) zum Empfangen der Eingangsleistung und einem Ausgang (106) zum Liefern der Ausgangsleistung durch den Schaltbetrieb.

9. Verfahren zum Betreiben einer Steuereinheit (116) für einen Umsetzer (102), der eine Eingangsleistung aufnimmt und eine Ausgangsleistung durch einen Schaltbetrieb liefert, wobei das Verfahren Folgendes umfasst:
- Empfangen eines Rückkopplungssignals (114) abhängig von der Ausgangsleistung des Umsetzers (102); und
- Liefern eines Steuersignals (122) zum Umsetzer (102), um dadurch den Schaltbetrieb des Umsetzers (102) zu steuern, wobei das Steuersignal (122) einem Schaltmuster entspricht, das als Antwort auf das Rückkopplungssignal (114) aktualisiert wird; wobei
- das Steuersignal (122) ein Oberwellenkompensationssignal (123) zum Verringern von Oberwellen in der Ausgangsleistung enthält; wobei die Oberwellen aus einer Zeitverzögerung (406) zwischen dem Aufnehmen des Rückkopplungssignals (114) und dem Aktualisieren des Schaltmusters stammen; und
- Liefern eines Modulationssignals (604); **gekennzeichnet durch**
- Erzeugen einer Oberwellenkompensationskomponente (720) auf der Grundlage der Zeitverzögerung (406); und
- Liefern des Steuersignals (122) abhängig vom Modulationssignal (604) und der Oberwellenkompensationskomponente (720).

10. Verfahren nach Anspruch 9, das ferner Folgendes umfasst:
- Addieren des Modulationssignals (604) und der Oberwellenkompensationskomponente (720), um dadurch ein Summensignal (726) zu erzeugen.

11. Verfahren nach einem der Ansprüche 9 oder 10, das ferner Folgendes umfasst:
- Liefern einer Nachschlagtabelle, in der mehrere Kompensationsindikatoren gespeichert sind, wobei jeder Kompensationsindikator einer entsprechenden Oberwellenkompensationskomponente (720) entspricht;
- Wählen eines der mehreren Kompensationsindikatoren und
- Erzeugen der Oberwellenkompensationskomponente (720) auf der Grundlage des gewählten Kompensationsindikators.

12. Verfahren nach einem der Ansprüche 9 bis 11, wobei die Ausgangsleistung mindestens zwei Phasen besitzt und das Aktualisieren des Schaltmusters zu einem Zeitpunkt (404) durchgeführt wird, zu dem die Spannungspegel der mindestens zwei Phasen verschieden sind.

13. Computerprogramm, wobei das Computerprogramm ausgelegt ist, wenn es durch die Steuereinheit nach Anspruch 1 ausgeführt wird, die Verfahrensschritte, die in einem der Ansprüche 9 bis 12 dargelegt sind, auszuführen.

## Revendications

1. Unité (116) de commande d'un convertisseur (102), recevant une puissance d'entrée et fournissant une puissance de sortie par une opération de commutation, l'unité (116) de commande comprenant :
- une entrée (118) pour recevoir un signal (114) de réaction dépendant de la puissance de sortie du convertisseur ; et
- une sortie (120) pour fournir un signal (122) de commande au convertisseur (102) pour ainsi commander l'opération de commutation du convertisseur (102), le signal (122) de commande correspondant à une configuration de commutation, qui est mise à jour en réaction au signal (114) de réaction ;
- le signal (122) de commande comprenant un signal (123) de compensation d'harmoniques pour réduire les harmoniques supérieurs dans la puissance de sortie, les harmoniques supérieurs provenant d'un retard (406) entre la prise du signal (114) de réaction et la mise à jour de la configuration de commutation ;
- l'unité (116) de commande comprenant, en outre,
- un générateur (716) de signal de modulation pour fournir un signal (604) de modulation ;
**caractérisé par**
- un générateur (718) de compensation pour générer une composante (720) de compensation d'harmonique sur la base du retard (406) et
- l'unité (116) de commande étant configurée pour fournir le signal (122) de commande dépendant du signal (604) de modulation et de la composante (720) de compensation d'harmonique.

2. Unité de commande suivant la revendication 1, l'unité (116) de commande comprenant, en outre,
- un additionneur (724) pour ajouter le signal (604) de modulation et la composante (720) de compensation d'harmonique, afin de produire ainsi un signal (726) de sommation.

3. Unité de commande suivant la revendication 2, l'unité (116) de commande comprenant, en outre :
- une unité (728) de traitement du signal pour traiter le signal (726) de sommation, en produisant ainsi le signal (122) de contrôle.

4. Unité de commande suivant l'une des revendications 1 à 3, comprenant, en outre,
- une table de consultation, dans laquelle sont mise en mémoire une pluralité d'indicateurs de compensation, chaque indicateur de compensation correspondant à une composante (720) de composition d'harmonique respective ; et
- le générateur (718) de compensation étant configuré pour produire la composante (720) de compensation d'harmonique sur la base d'un indicateur de compensation sélectionné.

5. Unité de commande suivant l'une des revendications 1 à 4, dans laquelle le générateur de compensation est configuré pour
- recevoir au moins l'un d'une profondeur (712) de modulation et d'un angle (714) de modulation ; et
- fournir, en réaction à cela, la composante (720) de compensation d'harmonique.

6. Unité de commande suivant l'une des revendications 1 à 5, dans laquelle la puissance de sortie comprend au moins deux phases et la mise à jour de la configuration de commutation est effectuée à un instant (404) où les niveaux de tension des au moins deux phases sont différents.

7. Unité de commande suivant l'une des revendications 1 à 6, dans laquelle le retard (406) est déterminé par un temps de calcul nécessaire pour déterminer le signal (122) de commande.

8. Dispositif (100) de convertisseur, comprenant :
- une unité (116) de commande suivant l'une des revendications 1 à 7 ; et
- le convertisseur (102) ayant une entrée (104) pour recevoir la puissance d'entrée et une sortie (106) pour fournir la puissance de sortie par l'opération de commutation.

9. Procédé pour faire fonctionner une unité (116) de commande d'un convertisseur (102) recevant une puissance d'entrée et fournissant une puissance de sortie par une opération de commutation, le procédé comprenant :
- recevoir un signal (114) de réaction dépendant de la puissance de sortie du convertisseur (102) ; et
- fournir un signal (122) de commande au convertisseur (102) pour commander ainsi l'opération de commutation du convertisseur (102), le signal (122) de commande correspondant à une configuration de commutation, qui est mise à jour en réaction au signal (114) de réaction ;
- le signal (122) de commande comprenant un signal (123) de compensation d'harmonique pour réduire des harmoniques supérieurs dans la puissance de sortie, les harmoniques supérieurs provenant d'un retard (406) entre la prise du signal (114) de réaction et la mise à jour de la configuration de commutation ;
- fournir un signal (604) de modulation ;
**caractérisé par**
- produire une composante (720) de compensation d'harmonique sur la base du retard (406) ; et
- fournir le signal (122) de commande dépendant du signal (604) de modulation et de la composante (720) de compensation d'harmonique.

10. Procédé suivant la revendication 9, comprenant, en outre
- additionner le signal (604) de modulation et la composante (720) de compensation d'harmonique pour produire ainsi un signal (726) de sommation.

11. Procédé suivant l'une des revendications 9 ou 10, comprenant, en outre
- fournir une table de consultation, dans laquelle est mise en mémoire une pluralité d'indicateurs de compensation, chaque indicateur de compensation correspondant à une composante (720) de compensation d'harmonique respective ;
- sélectionner l'un de la pluralité d'indicateurs de compensation ; et
- produire la composante (720) de compensation d'harmonique sur la base de l'indicateur de compensation sélectionné.

12. Procédé suivant l'une des revendications 9 à 11, dans lequel la puissance de sortie a au moins deux phases et la mise à jour de la configuration de commutation est effectuée à un instant (404) où les niveaux de tension des au moins deux phases sont différents.

13. Programme d'ordinateur, le programme d'ordinateur étant conçu pour, lorsqu'il est exécuté par l'unité de commande de la revendication 1, exécuter les stades du procédé, tel qu'indiqué dans l'une quelconque des revendications 9 à 12.
